# EUROPEAN PATENT SPECIFICATION

(11) **EP 4 222 029 B1**
(45) Date of publication and mention of the grant of the patent: **24.04.2024**
(21) Application number: 21789889.9
(22) Date of filing: 28.09.2021
(51) Int. Cl.: B60T 7/04, B60T 8/40, G05G 1/38

(54) **BRAKE PEDAL SYSTEM FOR A MOTOR VEHICLE**
BREMSPEDALSYSTEM FÜR EIN KRAFTFAHRZEUG
SYSTÈME DE PÉDALE DE FREIN POUR UN VÉHICULE AUTOMOBILE

(30) Priority: 22.12.2020 SE 2051551
(43) Date of publication of application: 09.08.2023
(73) Proprietor: CJ Automotive AB, 514 63 Dalstorp (SE)
(72) Inventor: WESCHKE, Carl Johan, 516 30 Dalsjöfors (SE)
(74) Representative: Bergenstråhle & Partners AB
(86) International application number: PCT/SE2021/050945
(87) International publication number: WO 2022/139650

(56) References cited:
- WO-A1-2006/040339
- WO-A2-2009/003835
- US-A9- 2014 251 064

## Description

### Technical field

The invention considers a brake pedal system for a motor vehicle.

### Background

Historically, motor vehicles such as cars had a purely mechanical pedal system for brakes, clutches and accelerator pedals. Nowadays, car manufacturers are moving from mechanical pedal systems to electrical pedal systems. In electrical pedal systems, the car is controlled from a computer-controlled system, often called ECU - Electronic Control Unit, actuated from the pedals in the car maneuvering different sensors. For example, the brake system may be controlled depending on the position of the brake pedal in relation to a position sensor, which position sensor sends signals to the ECU, which in turn controls the brake force as a response of the brake position. Position sensors may be of different kind, such as linear sensors which measure a linear distance of the pedal move, or rotation sensors which measure for example a rotation of an electric motor, like the solution disclosed in US 2015/070003 A1. Another type of rotation sensor is an angle sensor, for detection of rotation angle of a vehicle pedal around its axis of rotation. Such a solution is for example presented in EP 2 926 090 B1.

Further, in the electrical pedal systems, there is a need to simulate for the driver a purely mechanical pedal system so that the driver perceives that when he/she e.g. depresses for example the brake pedal, the brake system behaves as he/she is used to. This is important so that the driver feels comfortable behind the steering wheel. Such systems are known as "pedal feel simulating systems" and one example is presented in EP 3 264 218 B1. These systems normally also act as the "brake booster" if the pedal is a brake pedal. In for example older hydraulic systems, a system of one or more springs were connected to the pedal and the hydraulic system, where a braking force was transferred via the "booster" springs to the hydraulic system to "boost" the braking force in response to the braking force.

In some prior art solutions, there is also another type of sensor for controlling the brake function, namely a pedal force sensor. US 2018/0215368 A1 shows a brake unit with a pedal which is rotatably mounted around one shaft at one end. The pedal mechanism comprises a first sensor unit which is connected to a first brake system and a second sensor unit which is connected to a second brake system. The first sensor unit comprises first force and motion sensors attached on the pedal, wherein the motion sensor is a rotation sensor, and the force sensor is a pressure sensor. The second sensor unit is arranged on a reaction force generating mechanism which generates a reaction force against the force which the driver applies to the pedal. The second sensor unit comprises second force and motion sensors, wherein the motion sensor may be a potentiometer or rotation sensor, and the force sensor is a pressure sensor. The first force and motion sensors are connected to a first ECU, which controls the braking function via the first brake system. The second force and motion sensor are connected to a second ECU, which controls the braking system via the second brake system. The first brake system controlled by the first ECU is a main system while the second brake system controlled by the second ECU is a backup system.

Some drawbacks with existing electrical pedal systems are the following Since a failure of an electric system is a great risk, different backup systems are used to secure the braking function in the event of a failure in the electrical brake system. Prior art solutions either have a hydraulic backup sensor where like a brake booster system, where a first system is some kind of electronic sensor system (rotation sensor, angle sensor or the like) and the second system is connected to the pedal force where the brake force is transferred to a second, hydraulic system. The other type, like the one presented above in the patent application US 2018/0215368 A1, which is purely electronic, has different systems, one main system and one backup system. Having two systems is of course quite expensive and entails complicated solutions to provide a totally secure brake system. Another drawback with existing pedal feel simulating systems is that they are limited to the properties of the pedal feel system itself, like for example a single spring with a spring constant in combination with a stroke of the pedal feel arrangement, which gives a limited variation possibilities of the pedal feel.

Patent application WO 2009/003835 A2 discloses an electrical brake pedal system with an angle sensor at the fulcrum of the pedal arm and two springs, one for defining the static feedback force and one for limiting the force between a damper and the pedal arm.
Different car manufacturers have different demands on how the "feel" should be perceived, why a limited number of combinations is a drawback for a producer who delivers to different manufacturers. Thus, there is a need of a simple system which is cost efficient but still very secure, to ensure a secure and fully electronic brake pedal system, and with a great freedom of how to design the pedal feel of the brake pedal.

### Summary

It is an object of the invention to address at least some of the problems and issues outlined above. It is possible to achieve these objects and others by using a brake pedal system as defined in the attached independent claims.

According to an aspect, a brake pedal system for a motor vehicle is disclosed. The brake pedal system comprises a bracket, a pedal arm which is pivotally coupled to the bracket with a first end at a pivot point. The pedal arm further comprises a second end distal from the first end, and which second end is a free end and comprises a pedal plate. The pedal plate is arranged to be subjected to a braking force applied by a driver of the vehicle so that the pedal plate is pushed, and the pedal arm rotates around the pivot point.

The brake pedal system further comprises a first system for simulating at least a pedal feel, which first system comprises a compressible first elongated device for dampening a pivotal movement of the pedal arm around the pivot point, wherein the first elongated device has a longitudinal extension between a first end part coupled to the pedal arm at a first position on the pedal arm, and a second end part coupled to the bracket at a first position on the bracket. The first elongated device comprises at least a first spring parallel to the longitudinal extension of the first elongated device.

The brake pedal system further comprises a second system for sensing a pedal angle, which second system comprises a movable first part, which in use accompanies the rotational motion of the pedal arm and a stationary second part, wherein the first and the second part are to be arranged radially outside of the pivot point. A magnetic field sensing component is arranged in the first or in the second part, and a magnetic element arranged in that part of the first or the second part that does not comprise the magnetic field sensing component. The magnetic field sensing component is arranged to generate a first electric signal originating from magnetic interaction between the first and the second part when the first and the second part are moving in relation to each other. Preferably the first part is coupled to the second part so that the motion of the first part is controlled in relation to the second part.

The brake pedal system further comprises a third system for sensing at least a pedal force. The third system comprises a force sensor arranged at the bracket in a second position on the bracket, a compressible second elongated device which has a longitudinal extension between a first end part coupled to the pedal arm at a second position on the pedal arm, which is different from the first position, and a second end part connected to the force sensor. The second elongated device comprises at least a second spring parallel to the longitudinal extension of the second elongated device and which extends between the first end part and the second end part. The pedal force sensor is arranged to generate a second signal originating from a pedal force acting on the pedal arm and transferred to the force sensor via the second elongated device.

Such brake pedal system provides a secure electronic brake system with double security as well as a great freedom of how to design the pedal feel of the brake pedal without the need of additional mechanical or hydraulic system for extra security or for the pedal feel of the brake pedal.

The double security is achieved by the combination of the second system for sensing the pedal angle and the third system for sensing at least the brake force applied on the pedal plate. Any of the systems may be the master or the slave (backup) system of the other and since both systems are arranged to generate a signal to the vehicle Electronic Control System (ECU), the ECU handles the signals to transfer them to a braking operation, in response to the angle of the pedal arm and/or in response to the brake force applied on the pedal plate/pedal arm. If one of the systems fails/is not functioning and no signal is generated, the ECU registers that and the braking functions still is achieved via the signal from the other system. Prior art systems either have one electric system with electronic sensors and one mechanical or hydraulic system for backup, or two separate brake systems controlled by separate sensor systems. The inventive brake pedal system may be operated by one braking system, with need of only one ECU, controlled by two different sensor systems, which gives a simpler and cheaper solution but still with double security.

The pedal feel function of the brake pedal system presented above provides a great freedom in the setup of the pedal feel response, since the first system for sensing the pedal feel is complemented by the third system, which not only may be arranged for sensing the pedal force, but which also may be used in combination with the first system for setting up the total pedal feel of the brake pedal. Since both the first and the third system each comprises an elongated device with at least one spring, and that the elongated device of the first system is arranged between the bracket and the pedal arm at one position, and the elongated device of the third system is arranged between the bracket and the pedal arm in a second position, both systems are to be combined to set up the pedal feel curve. Of course, the attachment positions to the bracket and the pedal arm may be more or less the same for the two systems, but may also be different, with different lengths, angles etc. of the respective elongated device of the two systems. Since the spring constant as well as the positions on the bracket and the pedal arm of the respective first and third systems are used to design the pedal feel curve, the brake response/resistance and the hysteresis of the pedal feel curve may be designed with a great number of combinations, to meet the demands of different vehicle manufacturers. No prior art solutions provide such a system with all the presented advantages combined into one single electronic braking system.

According to an embodiment, the second system is arranged to send the first electric signal of the second system to a vehicle ECU as a response to a brake request to control a braking action, and the third system is arranged to send the second electric signal of the third system to the vehicle ECU as a response to a brake request.

According to an embodiment, the second system is arranged to act as a master system wherein the first electric signal of the second system is sent to a vehicle ECU as a response to a brake request to control a braking action, and the third system is arranged to act as a backup system of the second system, wherein the second electric signal of the third system is sent to the vehicle ECU as a response to a brake request, wherein the second electric signal of the third system is used to control a braking action if the first electric signal of the second system is not sent to the vehicle ECU. The vehicle ECU may be programmed in different ways of how to handle the signals of the second and the third systems, for example, the signals from the master system is always used and the signals from the slave system is ignored unless the master system fails to send a signal. Another option would be that the signals from both system always is registered and compared and a failure of one system curve (not predefined response) will cause the ECU to control the braking function by the correct curve etc. A lot of combination possibilities is possible to control the braking function with one ECU provided with signals from the second and the third systems.

According to an embodiment, the vehicle ECU is a first ECU and a second ECU, wherein the first electric signal of the second system is sent to a first vehicle ECU, and the second electric signal of third system is sent to a second vehicle ECU. By such a system, it is possible to separate the safety systems from each other and also to separate the pedal feel system from the safety systems.

According to an embodiment, the first position on the pedal arm, to which the first elongated device of the first system is coupled to the pedal arm with its first end part, is arranged between the first and the second end of the pedal arm at a first distance from the pivot point, and the at least one first spring of the first elongated device of the first system has a first spring rate, wherein the first distance and the first spring rate of the at least one first spring together defines a first pedal feel curve of the brake pedal of the brake pedal system. The at least one first spring may be several springs arranged on the first elongated device, to provide a wanted pedal feel curve. Further, the elongated device of the first system may comprise other parts such as sleeves, friction elements etc. which together with the spring/springs is arranged to achieve the pedal feel curve of the first system of the brake pedal system.

According to an embodiment, the second position on the pedal arm, to which the second elongated device of the third system is coupled to the pedal arm with its first end part, is arranged between the first and the second end of the pedal arm at a second distance from the pivot point, and the at least one second spring of the second elongated device of the third system has a second spring rate, wherein the second distance and the second spring rate of the at least one second spring together defines a second pedal feel curve of the brake pedal of the brake pedal system. Further, the elongated device of the third system may comprise other parts such as sleeves, friction elements etc. which together with the spring/springs is arranged to achieve the pedal feel curve of the third system of the brake pedal system.

According to an embodiment, the first pedal feel curve of the first system and the second pedal feel curve of the third system together defines a total pedal feel curve of the brake pedal of the brake pedal system.

According to an embodiment, the first position on the pedal arm, to which the first elongated device of the first system is coupled to the pedal arm with its first end part, is arranged on a first side of the pedal arm,, and the second position on the pedal arm, to which the second elongated device of the third system is coupled to the pedal arm with its first end part, is arranged on a second side of the pedal arm, which second side is opposite the first side of the pedal arm. By arranging the elongated devices of the first and the third systems on respective sides of the pedal arm, a greater freedom in positioning the elongated devices on the bracket and on the pedal arm is achieved.

According to an embodiment, the pedal arm comprises at least one shaft which extends through the pedal arm at the first position and the second position on the pedal arm. This means that the elongated device of the first system is coupled to the pedal arm at a common shaft to which also the second elongated device of the third system is coupled, which provides a simple solution of coupling the elongated devices to the pedal arm.

According to an alternative embodiment, the pedal arm comprises at least two shafts, wherein one shaft is arranged on the first side of the pedal arm in the first position on the pedal arm, and the other shaft is arranged on the second side of the pedal arm in the second position on the pedal arm. Such a solution provides a freedom in attaching the respective elongated devices of the first and the third systems to the pedal arm, wherein a great variation in adapting the pedal feel curve is achieved.

According to an embodiment, the first end part of the second elongated device of the third system comprises a first guide which protrudes towards the second end part of the second elongated device, and the second end par comprises a second guide which protrudes towards the first end part of the second elongated device, wherein the first and second guides are telescopically arranged relative each other, and wherein the second spring of the second elongated device is arranged radially outside the first and second guides. By such a solution, a linear motion of the force sensing system (the third system) gets a guided and controlled motion towards the force sensor.

According to an embodiment, the compressible first elongated device of the first system further comprises a first guide, which is firmly connected to first end 31 and protrudes towards the second end and a second guide, which is firmly connected to the second end and protrudes towards the first end of the elongated device. The first and second guides are telescopically arranged relative each other wherein the first guide encloses a part of the second guide. Further, the at least one first spring is a number of coil springs, wherein a first coil spring is arranged around at least a part of the first guide and a second coil spring is arranged around at least a part of the second guide. Further, a first sleeve is arranged around at least a part of the first coil spring, and a second sleeve is arranged around at least a part of the second coil spring. The first coil spring is clamped between the first end of the elongated device and an inside end of the first sleeve, and the second coil spring is clamped between the second end of the elongated device and an inside end of the second sleeve. The elongated device further comprises a third coil spring which is arranged around at least a part of the first and second sleeves and which is clamped between first and second sleeves.

According to an embodiment, the brake pedal system further comprises one or more friction elements arranged between at least one of the first and second coil springs and the corresponding enclosing first and second sleeves. Such friction element may be a leaf spring or the like, which causing an increased friction between the coil spring and the surrounding sleeve when the coil spring is compressed, which further adds design possibilities to the overall pedal feel.

Further possible features and benefits of this solution will become apparent from the detailed description below.

### Brief description of drawings

The solution will now be described in more detail by means of exemplary embodiments and with reference to the accompanying drawings, in which:
Fig. 1a is a perspective view from a first side of a brake pedal system according to an embodiment of the invention.
Fig. 1b is a section view of a first system for simulating a pedal feel of the brake pedal system.
Fig. 1c is a close-up view of Fig. 1a, showing the first system for simulating a pedal feel.
Fig. 2a is a perspective view of the brake pedal system from a second side which is opposite the first side shown in Fig. 1a.
Fig. 2b-c are section views from the second side showing sections in front of and behind a bracket part, for showing a third system (pedal force) in detail as well as showing a second system (pedal angle) in an overview.
Fig. 3a-c shows details of the second system (pedal angle).

### Detailed description

Briefly described, a "stand alone" and secure brake pedal system is provided that gives a cost-efficient solution for simulating, in an electrically controlled brake pedal system, the feel of a mechanical/hydraulic brake pedal system to a driver pressing the pedal of the electrically controlled brake pedal system. Further, the system provides a double security without the need of an extra vehicle ECU - only one ECU is needed. This is achieved by combining a first system arranged for simulating at least a pedal feel, a second system arranged for sensing e pedal angle, and a third system arranged for sensing at least a pedal force, where the third system also is preferred to simulating the pedal feel together with the first system.

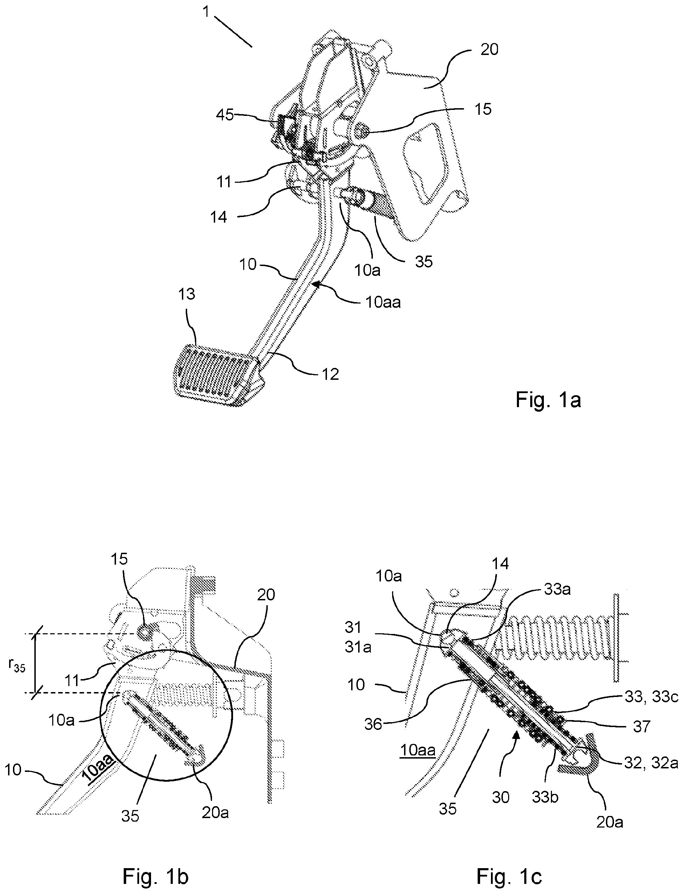

Fig. 1a shows a perspective view from a first side of a brake pedal system 1 according to an embodiment. Fig. 1b is a section view of a first system 35 for simulating a pedal feel of the brake pedal system, and Fig. 1c is a close-up view of the first system 35.

The brake pedal system 1 comprises a pedal arm 10 pivotally connected via a pivot point 15 to a bracket 20 of a motor vehicle. The pivot point 15 is realized as a pivot shaft on which a first end 11 of the pedal arm 10 is pivotally connected to the bracket 20. The pedal arm 10 has, at its second end 12, which is distal to the first end 11, a foot pedal plate 13 onto which a driver of the vehicle is to press when maneuvering the pedal arm 10. The first system 35 for simulating at least a pedal feel, is arranged at the first side 10aa of the pedal arm 10 and faces the viewer of Fig. 1a. The first system 35 comprises a compressible first elongated device 30 for dampening a pivotal movement of the pedal arm 10 around the pivot point 15, wherein the first elongated device 30 has a longitudinal extension between a first end part 31 coupled to the pedal arm 10 at a first position 10a on the pedal arm 10 and a second end part 32 coupled to the bracket 20 at a first bracket position 20a on the bracket 20. More precise, the first end part 31 is connected to a shaft 14, which is arranged at the first position 10a and connected to the pedal arm 10 and protruding from a first side 10aa of the pedal arm 10. The first position 10a is arranged between the first end 11 and the second end 12 of the pedal arm 10 at a first distance r₃₅ from the pivot point 15. Preferably, the shaft 14 extends through the pedal arm 10 from the first side 10aa of the pedal arm 10 and to an opposite second side 10bb of the pedal arm 10. The first elongated device 30 comprises at least one first spring 33 parallel to the longitudinal extension of the first elongated device 30, wherein the at least one first spring 33 has a first spring rate k₃₃. The first distance r₃₅ from the pivot point 15 to the first position 10a on the pedal arm and the first spring rate k₃₃ together defines a first pedal feel curve of the brake pedal 10 of the brake pedal system 1. Of course, the pedal feel curve also depends on the position of where the second end part 32 of the first elongated device 30 is coupled to the bracket 20 in the first bracket position 20a and the length of the first elongated device 30.

As can be seen in Fig. 1b-c the at least one first spring 33, is in one embodiment preferred to be a number of coil springs 33a, 33b, 33c and the first elongated device 30 of the first system 35 preferably comprises a first sleeve 36 and a second sleeve 37 arranged for guiding the springs. The first elongated device 30 further comprises a first guide 31a, which is firmly connected to first end 31 and protrudes towards the second end 32, and a second guide 32a, which is firmly connected to the second end 32 and protrudes towards the first end 31 of the elongated device 30. The first and second guides 31a, 32a are telescopically arranged relative each other wherein the first guide 31a encloses a part of the second guide 32a. A first spring coil 33a is arranged around the first guide 31a and the first sleeve 36 is in turn arranged around at least a part of the first coil spring 33a. The first coil spring 33a is clamped between the first end 31 of the elongated device 30 and an inside end of the first sleeve 36. A second coil spring 33b arranged around the second guide 32a and the second sleeve 37 is in turn arranged around at least a part of the second coil spring 33b. The second coil spring 33b is clamped between the second end 32 of the elongated device 30 and an inside end of the second sleeve 37. A third coil spring 33c is arranged around at least a part of the first and second sleeves 36, 37 and is clamped between them. The springs 33a-c and the sleeves thereby are combined to build up a desired pedal feel of the brake pedal 10. The first elongated device 30 may also comprise friction elements to add even more settings to the pedal feel of the brake pedal. Other possibilities are to design/use sleeves 36, 37 of different material or coat their sliding surfaces to create different coefficients of friction to impact the hysteresis curve. When attaching the compressible first elongated device 30 between the pedal arm 10 and a bracket 20/chassis of the motor vehicle, the compressible first elongated device 30 can be compressed when the driver presses the foot pedal plate 13. The at least one first spring 33, in one embodiment the springs 33a-c of the compressible first elongated device 30 provides a counter force to the force provided by the driver when pressing the pedal arm 10. Further, if there is a friction element arranged between a first housing/sleeve and for example a second housing/sleeve of the compressible first elongated device 30, the friction element counteracts the compressing and decompressing movement of the first elongated device 30 due to a frictional force that the friction element provides when the first and second housing moves in relation to each other in the direction of the first elongated device 30. The friction element provides a hysteresis to the movement of the pedal up and down in relation to the force that the driver exerts to the pedal, which is similar to the hysteresis that a driver experiences in a purely mechanical/hydraulic pedal system. As mentioned, this hysteresis is also possible to achieve by the choice of material in the sleeves 36, 37.

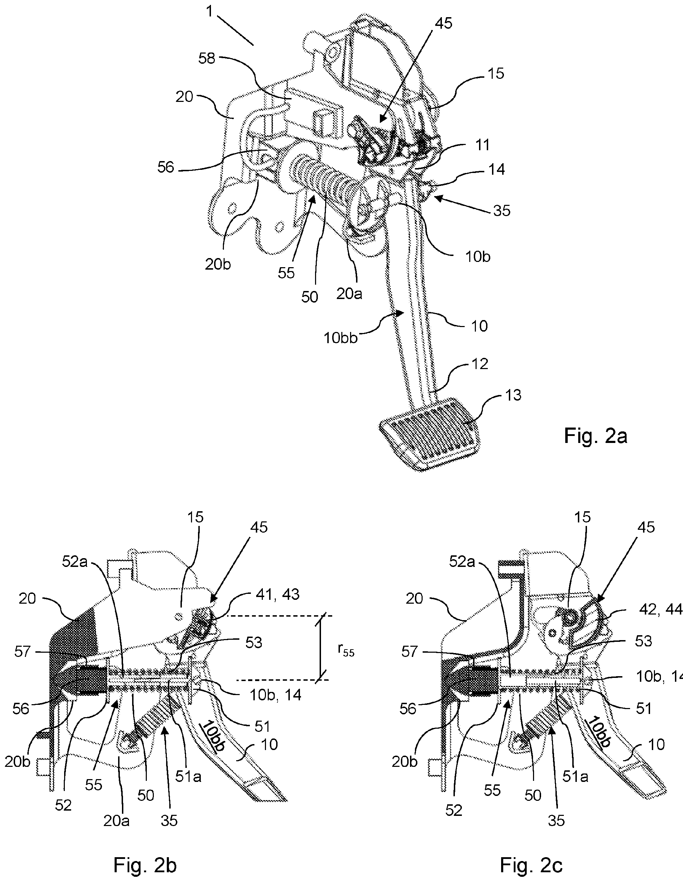

Fig. 2a shows a perspective view from a second side of the brake pedal system 1 of Fig. 1, which is an opposite side of the brake pedal system 1. Fig. 2b-c are section views from the second side showing sections in front of and behind a bracket part, for showing a third system 55 (pedal force) in detail as well as showing the second system 45 (pedal angle) in an overview.

The brake pedal system 1 comprises the third system 55 for sensing at least a pedal force, which is visible in Fig. 2a-c. The third system comprises a force sensor 56, which is arranged at the bracket 20 in a second position 20b on the bracket 20. Preferably, the force sensor 56 is arranged in a housing 57, which is securely attached to the bracket 20. The force sensor 56 is in turn connected with a wire to a connector 58 and a sensor Printed Circuit Board. The third system 55 further comprises a compressible second elongated device 50 which has a longitudinal extension between a first end part 51, which is coupled to the pedal arm 10 at a second position 10b on the pedal arm 10, which in the preferred embodiment is the common shaft 14, which also protrudes from the second side 10bb of the pedal arm 10, as described above. The second position 10b is in this embodiment different from the first position 10a, since it is arranged on the opposite side of the pedal arm 10, but the second position 10b may also be different in that way that the shaft 14 may be two different shafts (not shown here), which are arranged at different distances relative the pivot point 15, depending on the design criterions for a certain car manufacturer. The compressible second elongated device 50 further comprises a second end part 52, which is connected to the force sensor 56, and further the second device 50 comprises a second spring 53 parallel to the longitudinal extension of the second elongated device 50 and extending between the first end part 51 and the second end part 52. The pedal force sensor 56 is arranged to generate a second signal which originates from a pedal force acting on the pedal arm 10 (pedal plate) and transferred to the force sensor 56 via the second elongated device 50. Preferably, the first end part 51 of the second elongated device 50 comprises a first guide 51a, which protrudes towards the second end part 52 of the second elongated device 50, and the second end part 52 comprises a second guide 52a, which protrudes towards the first end part 51 of the second elongated device 50. The first and second guides 51a, 52a are telescopically arranged relative each other, and the second spring 53 of the second elongated device 50 is arranged radially outside the first and second guides 51a, 52a.

The second position 10b on the pedal arm 10, to which the second elongated device 50 is coupled to the pedal arm 10 with its first end part 51, is arranged between the first and the second end 11, 12 of the pedal arm 10 at a second distance r₅₅ from the pivot point 15. As mentioned above, it is preferred to have a common shaft 14, wherein the second distance r₅₅, of the third system 55 may be similar with the first distance r₃₅ of the first system 35.

The at least one second spring 53 of the second elongated device 50 of the third system 55 has a second spring rate k₅₃, wherein the spring rate, together with the positioning of the second elongated device 50 on the bracket 20 and the pedal arm 10, (second position 20b on the bracket 20, second position 10b on the pedal arm 10) respectively and the total length of the second elongated device 50, all together defines the properties of the pedal force function. Additionally, the second elongated device 50 is preferably used also to add design possibilities to the pedal feel of the brake pedal system 1. This is achieved by combining the first system 35 with the third system 55 according to the inventive concept. The second distance r₅₅ and the second spring rate k₅₃ of the at least one second spring 53 together defines also a second pedal feel curve of the brake pedal 10. Of course, the pedal feel curve of this third system 55 also depends on the position of where the second end part 52/the housing 57 of the second elongated device 50 is coupled to the bracket 20 in the second position 20b and the length of the second elongated device 50. The first and the third systems 35, 55 thereby are used to define the counter force to the force provided by the driver when pressing the pedal arm 10, as well total pedal feel of the brake pedal system 1. The latter discloses the pedal feel and hysteresis to the movement of the pedal up and down in relation to the force that the driver exerts to the pedal, which is similar to the hysteresis that a driver experiences in a purely mechanical/hydraulic pedal system.

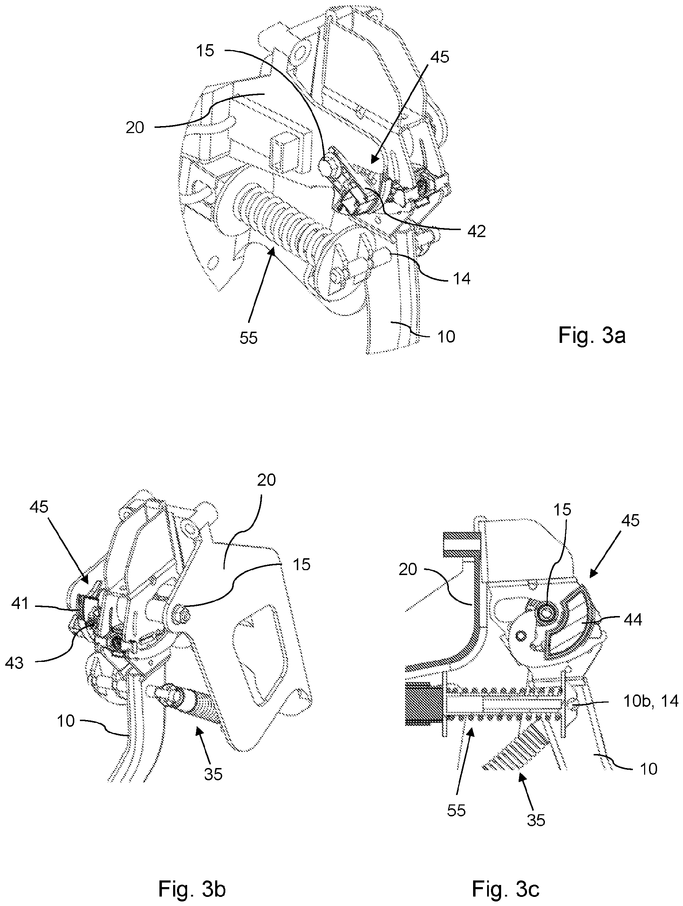

Fig. 3a-c shows details of the second system 45 of the invention, which main concept and details are described in WO 2014/084791 A1, filed by the applicant. The brake pedal system 1 according to the invention thus further comprises the second system 45 for sensing a pedal angle. The second system 45 comprises a movable first part 41, which in use accompanies the rotational motion of the pedal arm 10 and a stationary second part 42. The first and the second part 41, 42 are arranged radially outside of the pivot point 15 as may be seen in the figures. A magnetic field sensing component 43 is arranged in the first 41 or in the second part 42 and a magnetic element 44 is arranged in that part of the first or the second part 41, 42 that does not comprise the magnetic field sensing component 43. The magnetic field sensing component 43 is arranged to generate a first electric signal which originates from magnetic interaction between the first and the second part 41, 42 when the first and the second part are moving in relation to each other.

The movable first part 41 may directly, or through a link, be coupled with the pedal shaft and by that accompany the rotational motion and the stationary second part 42, may be fastened in the vehicle chassis through the bracket 20. Preferably, the first part 41 is coupled to the second part 42 so that the motion of the first part 41 is controlled in radial direction in relation to the second part 42. The magnetic field sensing component 43 may be for example of Hall or Reed type. The "angle sensor" (the second system 45) detects the magnetic field depending on where the magnetic element 44 is in relation to the magnetic field sensing component 43. Depending on the different magnetic field sensing components 43 different signals result, corresponding to a certain rotation of the vehicle pedal is achieved. The signals can be partly digital (on/off) or linear over the motion. For example, the second part 42 may comprise a printed circuit card, in which the magnetic field sensing component 43 is placed, and a sensor housing. The sensor housing is preferably designed as a disk or as part of a circle which has an extension in a direction along the circumference of the pedal shaft/the pivot point 15. The device can deliver one or several types of position signals depending on the design of the printed circuit card. The signals can be of either digital or analogous character or a combination if desired.

On top of the above described advantages regarding the three systems 35, 45, 55, a double security is achieved via the second and the third systems 45, 55. The second system 45 is arranged to send the first electric signal of the second system 45 to a vehicle ECU (Electronic Control Unit) as a response to a brake request to control a braking action, which brake request (e.g. the force provided by the driver when pressing the pedal arm 10/pedal plate 13) results in an angle change detected by the second system 45. The third system 55 is arranged to send the second electric signal of the third system 55 to the vehicle ECU as a response to a brake request, which is a result of the force subjected to the pedal arm 10/pedal plate 13, and which results in a signal detected by the pedal force sensor 56 of the third system 55, and which signal is dependent on the force "level".

According to the preferred embodiment, the second system 45 (pedal angle) is arranged to act as a master system wherein the first electric signal of the second system 45 is sent to a vehicle ECU as a response to a brake request to control the braking action, and the third system 55 is arranged to act as a backup system of the second system 45, wherein the second electric signal of the third system 55 is sent to the vehicle ECU as a response to a brake request. The second electric signal of the third system 55 is used to control a braking action if the first electric signal of the second system 45 is not sent to the vehicle ECU. The vehicle ECU may of course be programmed in different ways of how to handle the signals of the second and the third systems 45, 55, for example, the signals from the master system is always used and the signals from the slave system is ignored unless the master system fails to send a signal. Another option would be that the signals from both systems always are registered and compared and a failure of one system curve (not predefined response) will cause the ECU to control the braking function by the correct curve etc. A lot of combination possibilities is possible to control the braking function with one ECU provided with signals from the second and the third systems 45, 55.

In another embodiment, the vehicle ECU is a first ECU and a second ECU, wherein the first electric signal of the second system 45 is sent to a first vehicle ECU, and the second electric signal of third system 55 is sent to a second vehicle ECU, to separate the systems from each other.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A brake pedal system (1) for a motor vehicle, the system comprising:
a bracket (20),
a pedal arm (10) pivotally coupled to the bracket (20) with a first end (11) at a pivot point (15), the pedal arm (10) further comprises a second end (12) opposite the first end (11), which second end (12) is a free end and comprises a pedal plate (13);
a first system (35) for simulating at least a pedal feel, comprising a compressible first elongated device (30) for dampening a pivotal movement of the pedal arm (10) around the pivot point (15), the first elongated device (30) having a longitudinal extension between a first end part (31) coupled to the pedal arm (10) at a first position (10a) on the pedal arm (10), and a second end part (32) coupled to the bracket (20) at a first bracket position (20a) on the bracket (20), the first elongated device (30) comprises at least one first spring (33) parallel to the longitudinal extension of the first elongated device (30);
a second system (45) for sensing a pedal angle, comprising a movable first part (41), which in use accompanies the rotational motion of the pedal arm (10), a stationary second part (42), wherein the first and the second part (41, 42) are to be arranged radially outside of the pivot point (15), a magnetic field sensing component (43) arranged in the first (41) or in the second part (42) and a magnetic element (44) arranged in that part of the first or the second part (41, 42) that does not comprise the magnetic field sensing component (43), wherein the magnetic field sensing component (43) is arranged to generate a first electric signal originating from magnetic interaction between the first and the second part (41, 42) when the first and the second part are moving in relation to each other;
a third system (55) for sensing at least a pedal force, comprising a force sensor (56) arranged at the bracket (20) in a second position (20b) on the bracket (20), a compressible second elongated device (50) having a longitudinal extension between a first end part (51) coupled to the pedal arm (10) at a second position (10b) on the pedal arm (10), different from the first position (10a), and a second end part (52) connected to the force sensor (56), the second elongated device (50) comprises at least one second spring (53) parallel to the longitudinal extension of the second elongated device (50) and extending between the first end part (51) and the second end part (52), wherein the pedal force sensor (56) is arranged to generate a second signal originating from a pedal force acting on the pedal arm (10) and transferred to the force sensor (56) via the second elongated device (50).

2. Brake pedal system (1) according to claim 1, wherein the second system (45) is arranged to send the first electric signal of the second system (45) to a vehicle ECU as a response to a brake request to control a braking action, and the third system (55) is arranged to send the second electric signal of the third system (55) to the vehicle ECU as a response to a brake request.

3. Brake pedal system (1) according to claim 1, wherein the second system (45) is arranged to act as a master system wherein the first electric signal of the second system (45) is sent to a vehicle ECU as a response to a brake request to control a braking action, and the third system (55) is arranged to act as a backup system of the second system (45), wherein the second electric signal of the third system (55) is sent to the vehicle ECU as a response to a brake request, wherein the second electric signal of the third system (55) is used to control a braking action if the first electric signal of the second system (45) is not sent to the vehicle ECU.

4. Brake pedal system (1) according to any of claim 2 or 3, wherein the vehicle ECU is a first ECU and a second ECU, wherein the first electric signal of the second system (45) is sent to a first vehicle ECU, and the second electric signal of third system (55) is sent to a second vehicle ECU.

5. Brake pedal system (1) according to any of the preceding claims, wherein the first position (10a) on the pedal arm (10), to which the first elongated device (30) of the first system (35) is coupled to the pedal arm (10) with its first end part (31), is arranged between the first and the second end (11, 12) of the pedal arm (10) at a first distance (r₃₅) from the pivot point (15), and the at least one first spring (33) of the first elongated device (30) of the first system (35) has a first spring rate (kss), wherein the first distance (r₃₅) and the first spring rate (k₃₃) of the at least one first spring (33) together defines a first pedal feel curve of the brake pedal (10) of the brake pedal system (1).

6. Brake pedal system (1) according to any of the preceding claims, wherein the second position (10b) on the pedal arm (10), to which the second elongated device (50) of the third system (55) is coupled to the pedal arm (10) with its first end part (51), is arranged between the first and the second end (11, 12) of the pedal arm (10) at a second distance (r₅₅) from the pivot point (15), and the at least one second spring (53) of the second elongated device (50) of the third system (55) has a second spring rate (kss), wherein the second distance (r₅₅) and the second spring rate (k₅₃) of the at least one second spring (53) together defines a second pedal feel curve of the brake pedal (10) of the brake pedal system (1).

7. Brake pedal system (1) according to claim 5 and 6, wherein the first pedal feel curve of the first system (35) and the second pedal feel curve of the third system (55) together defines a total pedal feel curve of the brake pedal (10) of the brake pedal system (1).

8. Brake pedal system (1), according to any of the preceding claims, wherein the first position (10a) on the pedal arm (10), to which the first elongated device (30) of the first system (35) is coupled to the pedal arm (10) with its first end part (31), is arranged on a first side (10aa) of the pedal arm (10), and the second position (10b) on the pedal arm (10), to which the second elongated device (50) of the third system (55) is coupled to the pedal arm (10) with its first end part (51), is arranged on a second side (10bb) of the pedal arm (10), which second side (10bb) is opposite the first side (10aa) of the pedal arm (10).

9. Brake pedal system (1), according to any of the preceding claims, wherein the pedal arm (10) comprises at least one shaft (14) which extends through the pedal arm (10) at the first position (10a) and the second position (10b).

10. Brake pedal system (1), according to any of claims 1 - 8, wherein the pedal arm (10) comprises at least two shafts (14) wherein one shaft (14) is arranged on the first side (10aa) of the pedal arm (10) in the first position (10a) on the pedal arm (10), and the other shaft (14) is arranged on the second side (10bb) of the pedal arm (10) in the second position (b) on the pedal arm (10).

11. Brake pedal system (1) according to any of the preceding claims, wherein the first end part (51) of the second elongated device (50) of the third system (55) comprises a first guide (51a) which protrudes towards the second end part (52) of the second elongated device (50), and the second end part (52) comprises a second guide (52a) which protrudes towards the first end part (51) of the second elongated device (50), wherein the first and second guides (51a, 52a) are telescopically arranged relative each other, and wherein the second spring (53) of the second elongated device (50) is arranged radially outside the first and second guides (51a, 52a).

12. Brake pedal system (1) according to any of the preceding claims, wherein the compressible first elongated device (30) of the first system (35) further comprises:
a first guide (31a) firmly connected to first end (31) and protrudes towards the second end (32) of the elongated device (30),
a second guide (32a) firmly connected to the second end (32) and protrudes towards the first end (31) of the elongated device (30), wherein the first and
second guides (31a, 32a) are telescopically arranged relative each other wherein the first guide (31a) encloses a part of the second guide (32a),
that the at least one first spring (33) is a plurality of coil springs (33a, 33b, 33c), wherein a first coil spring (33a) is arranged around at least a part of the first guide (31a) and a second coil spring (33b) is arranged around at least a part of the second guide (32a),
a first sleeve (36) arranged around at least a part of the first coil spring (33a), a second sleeve (37) arranged around at least a part of the second coil spring (33b),
wherein the first coil spring (33a) is clamped between the first end (31) of the elongated device (30) and an inside end of the first sleeve (36), and the second coil spring (33b) is clamped between the second end (32) of the elongated device (30) and an inside end of the second sleeve (37),
a third coil spring (33c) arranged around at least a part of the first and second sleeves (36, 37) and which third coil spring (33c) is clamped between first and second sleeves (36, 37).

13. Brake pedal system (1) according to claim 12, further comprising one or more friction elements arranged between at least one of the first and second coil springs (33a, 33b) and the corresponding enclosing first and second sleeves (36, 37).

## Patentansprüche

1. Bremspedalsystem (1) für ein Kraftfahrzeug, wobei das System umfasst:
eine Halterung (20),
einen Pedalarm (10), der mit einem ersten Ende (11) an einem Drehpunkt (15) schwenkbar mit der Halterung (20) gekoppelt ist, wobei der Pedalarm (10) ferner ein zweites Ende (12) gegenüber dem ersten Ende (11) umfasst, wobei das zweite Ende (12) ein freies Ende ist und eine Pedalplatte (13) umfasst;
ein erstes System (35) zum Simulieren mindestens eines Pedalgefühls, umfassend eine zusammendrückbare erste längliche Vorrichtung (30) zum Dämpfen einer Schwenkbewegung des Pedalarms (10) um den Drehpunkt (15), wobei die erste längliche Vorrichtung (30) eine Längserstreckung zwischen einem ersten Endteil (31), das mit dem Pedalarm (10) an einer ersten Position (10a) an dem Pedalarm (10) angeordnet ist, und einem zweiten Endteil (32), das mit der Halterung (20) an einer ersten Halterungsposition (20a) an der Halterung (20) gekoppelt ist, aufweist, wobei die erste längliche Vorrichtung (30) mindestens eine erste Feder (33) umfasst, die parallel zur Längserstreckung der ersten länglichen Vorrichtung (30) verläuft;
ein zweites System (45) zum Erfassen eines Pedalwinkels, umfassend ein bewegbares erstes Teil (41), das beim Betrieb die Drehbewegung des Pedalarms (10) begleitet, ein feststehendes zweites Teil (42), wobei das erste und das zweite Teil (41, 42) radial außerhalb des Drehpunkts (15) anzuordnen sind, eine Magnetfelderfassungskomponente (43), die in dem ersten (41) oder in dem zweiten Teil (42) angeordnet ist, und ein magnetisches Element (44), das in dem Teil des ersten oder des zweiten Teils (41, 42) angeordnet ist, das nicht die Magnetfelderfassungskomponente (43) umfasst, wobei die Magnetfelderfassungskomponente (43) dazu eingerichtet ist, ein erstes elektrisches Signal zu erzeugen, das der magnetischen Wechselwirkung zwischen dem ersten und dem zweiten Teil (41, 42) entstammt, wenn sich das erste und das zweite Teil in Bezug zueinander bewegen;
ein drittes System (55) zum Erfassen mindestens einer Pedalkraft, umfassend einen Kraftsensor (56), der an der Halterung (20) in einer zweiten Position (20b) an der Halterung (20) angeordnet ist, eine zusammendrückbare zweite längliche Vorrichtung (50), die eine Längserstreckung zwischen einem ersten Endteil (51), das mit dem Pedalarm (10) in einer zweiten Position (10b) an dem Pedalarm (10), verschieden von der ersten Position (10a), gekoppelt ist, und einem zweiten Endteil (52), das mit dem Kraftsensor (56) verbunden ist, aufweist, die zweite längliche Vorrichtung (50) mindestens eine zweite Feder (53) umfasst, die parallel zur Längserstreckung der zweiten länglichen Vorrichtung (50) verläuft und sich zwischen dem ersten Endteil (51) und dem zweiten Endteil (52) erstreckt, wobei der Pedalkraftsensor (56) dazu eingerichtet ist, ein zweites Signal zu erzeugen, das einer auf den Pedalarm (10) wirkenden Pedalkraft entstammt und über die zweite längliche Vorrichtung (50) an den Kraftsensor (56) übertragen wird.

2. Bremspedalsystem (1) nach Anspruch 1, wobei das zweite System (45) dazu eingerichtet ist, das erste elektrische Signal des zweiten Systems (45) an eine Fahrzeug-ECU als Antwort auf eine Bremsaufforderung zur Steuerung einer Bremsmaßnahme zu senden, und das dritte System (55) dazu eingerichtet ist, das zweite elektrische Signal des dritten Systems (55) an die Fahrzeug-ECU als Antwort auf eine Bremsaufforderung zu senden.

3. Bremspedalsystem (1) nach Anspruch 1, wobei das zweite System (45) dazu eingerichtet ist, als ein Hauptsystem zu wirken, wobei das erste elektrische Signal des zweiten Systems (45) an eine Fahrzeug-ECU als Antwort auf eine Bremsaufforderung zur Steuerung einer Bremsmaßnahme gesendet wird, und das dritte System (55) dazu eingerichtet ist, als ein Sicherungssystem des zweiten Systems (45) zu wirken, wobei das zweite elektrische Signal des dritten Systems (55) an die Fahrzeug-ECU als Antwort auf eine Bremsaufforderung gesendet wird, wobei das zweite elektrische Signal des dritten Systems (55) zur Steuerung einer Bremsmaßnahme verwendet wird, wenn das erste elektrische Signal des zweiten Systems (45) nicht an die Fahrzeug-ECU gesendet wird.

4. Bremspedalsystem (1) nach einem des Anspruchs 2 oder 3, wobei die Fahrzeug-ECU eine erste ECU und eine zweite ECU ist, wobei das erste elektrische Signal des zweiten Systems (45) an eine erste Fahrzeug-ECU gesendet wird und das zweite elektrische Signal des dritten Systems (55) an eine zweite Fahrzeug-ECU gesendet wird.

5. Bremspedalsystem (1) nach einem der vorhergehenden Ansprüche, wobei die erste Position (10a) am Pedalarm (10), an der die erste längliche Vorrichtung (30) des ersten Systems (35) mit ihrem ersten Endteil (31) mit dem Pedalarm (10) gekoppelt ist, zwischen dem ersten und dem zweiten Ende (11, 12) des Pedalarms (10) in einem ersten Abstand (r3s) vom Drehpunkt (15) angeordnet ist und die mindestens eine erste Feder (33) der ersten länglichen Vorrichtung (30) des ersten Systems (35) eine erste Federrate (k₃₃) aufweist, wobei der erste Abstand (r₃₅) und die erste Federrate (k₃₃) der mindestens einen ersten Feder (33) zusammen eine erste Pedalgefühlkurve des Bremspedals (10) des Bremspedalsystems (1) definieren.

6. Bremspedalsystem (1) nach einem der vorhergehenden Ansprüche, wobei die zweite Position (10b) am Pedalarm (10), an der die zweite längliche Vorrichtung (50) des dritten Systems (55) mit ihrem ersten Endteil (51) mit dem Pedalarm (10) gekoppelt ist, zwischen dem ersten und dem zweiten Ende (11, 12) des Pedalarms (10) in einem zweiten Abstand (r₅₅) vom Drehpunkt (15) angeordnet ist und die mindestens eine zweite Feder (53) der zweiten länglichen Vorrichtung (50) des dritten Systems (55) eine zweite Federrate (k₅₃) aufweist, wobei der zweite Abstand (r₅₅) und die zweite Federrate (k₅₃) der mindestens einen zweiten Feder (53) zusammen eine zweite Pedalgefühlkurve des Bremspedals (10) des Bremspedalsystems (1) definieren.

7. Bremspedalsystem (1) nach Anspruch 5 und 6, wobei die erste Pedalgefühlkurve des ersten Systems (35) und die zweite Pedalgefühlkurve des dritten Systems (55) zusammen eine Gesamtpedalgefühlkurve des Bremspedals (10) des Bremspedalsystems (1) definieren.

8. Bremspedalsystem (1) nach einem der vorhergehenden Ansprüche, wobei die erste Position (10a) am Pedalarm (10), an der die erste längliche Vorrichtung (30) des ersten Systems (35) mit ihrem ersten Endteil (31) mit dem Pedalarm (10) gekoppelt ist, an einer ersten Seite (10aa) des Pedalarms (10) angeordnet ist, und die zweite Position (10b) am Pedalarm (10), an der die zweite längliche Vorrichtung (50) des dritten Systems (55) mit ihrem ersten Endteil (51) mit dem Pedalarm (10) gekoppelt ist, an einer zweiten Seite (10bb) des Pedalarms (10) angeordnet ist, wobei die zweite Seite (10bb) der ersten Seite (10aa) des Pedalarms (10) gegenüberliegt.

9. Bremspedalsystem (1) nach einem der vorhergehenden Ansprüche, wobei der Pedalarm (10) mindestens eine Welle (14) umfasst, die sich durch den Pedalarm (10) an der ersten Position (10a) und der zweiten Position (10b) erstreckt.

10. Bremspedalsystem (1) nach einem der Ansprüche 1 bis 8, wobei der Pedalarm (10) mindestens zwei Wellen (14) umfasst, wobei die eine Welle (14) auf der ersten Seite (10aa) des Pedalarms (10) in der ersten Position (10a) am Pedalarm (10) angeordnet ist und die andere Welle (14) auf der zweiten Seite (10bb) des Pedalarms (10) in der zweiten Position (b) am Pedalarm (10) angeordnet ist.

11. Bremspedalsystem (1) nach einem der vorhergehenden Ansprüche, wobei das erste Endteil (51) der zweiten länglichen Vorrichtung (50) des dritten Systems (55) eine erste Führung (51a) umfasst, die in Richtung des zweiten Endteils (52) der zweiten länglichen Vorrichtung (50) vorsteht, und das zweite Endteil (52) eine zweite Führung (52a) umfasst, die in Richtung des ersten Endteils (51) der zweiten länglichen Vorrichtung (50) vorsteht, wobei die erste und die zweite Führung (51a, 52a) teleskopartig relativ zueinander angeordnet sind, und wobei die zweite Feder (53) der zweiten länglichen Vorrichtung (50) radial außerhalb der ersten und der zweiten Führung (51a, 52a) angeordnet ist.

12. Bremspedalsystem (1) nach einem der vorhergehenden Ansprüche, wobei die zusammendrückbare erste längliche Vorrichtung (30) des ersten Systems (35) ferner umfasst:
eine erste Führung (31a), die mit dem ersten Ende (31) fest verbunden ist und in Richtung des zweiten Endes (32) der länglichen Vorrichtung (30) vorsteht,
eine zweite Führung (32a), die fest mit dem zweiten Ende (32) verbunden ist und in Richtung des ersten Endes (31) der länglichen Vorrichtung (30) vorsteht, wobei die erste und die zweite Führung (31a, 32a) teleskopisch in Bezug zueinander angeordnet sind und die erste Führung (31a) einen Teil der zweiten Führung (32a) umschließt,
wobei die mindestens eine erste Feder (33) aus einer Vielzahl von Schraubenfedern (33a, 33b, 33c) besteht, wobei eine erste Schraubenfeder (33a) um mindestens einen Teil der ersten Führung (31a) und eine zweite Schraubenfeder (33b) um mindestens einen Teil der zweiten Führung (32a) angeordnet ist,
eine erste Hülse (36), die um mindestens einen Teil der ersten Schraubenfeder (33a) angeordnet ist, eine zweite Hülse (37), die um mindestens einen Teil der zweiten Schraubenfeder (33b) angeordnet ist,
wobei die erste Schraubenfeder (33a) zwischen dem ersten Ende (31) der länglichen Vorrichtung (30) und einem inneren Ende der ersten Hülse (36) festgeklemmt ist und die zweite Schraubenfeder (33b) zwischen dem zweiten Ende (32) der länglichen Vorrichtung (30) und einem inneren Ende der zweiten Hülse (37) festgeklemmt ist,
eine dritte Schraubenfeder (33c), die um mindestens einen Teil der ersten und der zweiten Hülse (36, 37) herum angeordnet ist, wobei die dritte Schraubenfeder (33c) zwischen der ersten und der zweiten Hülse (36, 37) festgeklemmt ist.

13. Bremspedalsystem (1) nach Anspruch 12, ferner umfassend ein oder mehrere Reibungselemente, die zwischen mindestens einer der ersten und der zweiten Schraubenfeder (33a, 33b) und der entsprechenden umschließenden ersten und zweiten Hülse (36, 37) angeordnet sind.

## Revendications

1. Système de pédale de frein (1) pour un véhicule à moteur, le système comprenant :
un support (20),
un bras de pédale (10) couplé de façon pivotante au support (20) avec une première extrémité (11) à un point de pivotement (15), le bras de pédale (10) comprend en outre une seconde extrémité (12) opposée à la première extrémité (11), laquelle seconde extrémité (12) est une extrémité libre et comprend une plaque de pédale (13) ;
un premier système (35) pour simuler au moins une sensation de pédale, comprenant un premier dispositif allongé compressible (30) pour amortir un mouvement pivotant du bras de pédale (10) autour du point de pivotement (15), le premier dispositif allongé (30) ayant une extension longitudinale entre une première partie d'extrémité (31) couplée au bras de pédale (10) à une première position (10a) sur le bras de pédale (10), et une seconde partie d'extrémité (32) couplée au support (20) à une première position de support (20a) sur le support (20), le premier dispositif allongé (30) comprend au moins un premier ressort (33) parallèle à l'extension longitudinale du premier dispositif allongé (30) ;
un deuxième système (45) pour détecter un angle de pédale, comprenant une première partie mobile (41), qui, durant l'utilisation, accompagne le mouvement rotationnel du bras de pédale (10), une seconde partie stationnaire (42), dans lequel la première et la seconde parties (41, 42) doivent être agencées radialement à l'extérieur du point de pivotement (15), un composant de détection de champ magnétique (43) agencé dans la première (41) ou dans la seconde partie (42) et un élément magnétique (44) agencé dans cette partie, de la première ou de la seconde partie (41, 42), qui ne comprend pas le composant de détection de champ magnétique (43), dans lequel le composant de détection de champ magnétique (43) est agencé pour générer un premier signal électrique issu d'interaction magnétique entre la première et la seconde parties (41, 42) lorsque la première et la seconde parties sont en mouvement l'une par rapport à l'autre ;
un troisième système (55) pour détecter au moins une force de pédale, comprenant un capteur de force (56) agencé sur le support (20) dans une seconde position (20b) sur le support (20), un second dispositif allongé compressible (50) ayant une extension longitudinale entre une première partie d'extrémité (51) couplée au bras de pédale (10) à une seconde position (10b) sur le bras de pédale (10), différente de la première position (10a), et une seconde partie d'extrémité (52) reliée au capteur de force (56), le second dispositif allongé (50) comprend au moins un second ressort (53) parallèle à l'extension longitudinale du second dispositif allongé (50) et s'étendant entre la première partie d'extrémité (51) et la seconde partie d'extrémité (52), dans lequel le capteur de force de pédale (56) est agencé pour générer un second signal issu d'une force de pédale agissant sur le bras de pédale (10) et transférée au capteur de force (56) par l'intermédiaire du second dispositif allongé (50).

2. Système de pédale de frein (1) selon la revendication 1, dans lequel le deuxième système (45) est agencé pour envoyer le premier signal électrique du deuxième système (45) à une ECU de véhicule en tant que réponse à une demande de frein pour commander une action de freinage, et le troisième système (55) est agencé pour envoyer le second signal électrique du troisième système (55) à l'ECU de véhicule en tant que réponse à une demande de frein.

3. Système de pédale de frein (1) selon la revendication 1, dans lequel le deuxième système (45) est agencé pour servir de système maître, dans lequel le premier signal électrique du deuxième système (45) est envoyé à une ECU de véhicule en tant que réponse à une demande de frein pour commander une action de freinage, et le troisième système (55) est agencé pour servir de système d'appoint du deuxième système (45), dans lequel le second signal électrique du troisième système (55) est envoyé à l'ECU de véhicule en tant que réponse à une demande de frein, dans lequel le second signal électrique du troisième système (55) est utilisé pour commander une action de freinage si le premier signal électrique du deuxième système (45) n'est pas envoyé à l'ECU de véhicule.

4. Système de pédale de frein (1) selon l'une quelconque de la revendication 2 ou 3, dans lequel l'ECU de véhicule est une première ECU et une seconde ECU, dans lequel le premier signal électrique du deuxième système (45) est envoyé à une première ECU de véhicule, et le second signal électrique de troisième système (55) est envoyé à une seconde ECU de véhicule.

5. Système de pédale de frein (1) selon l'une quelconque des revendications précédentes, dans lequel la première position (10a) sur le bras de pédale (10), à laquelle le premier dispositif allongé (30) du premier système (35) est couplé au bras de pédale (10) avec sa première partie d'extrémité (31), est agencée entre la première et la seconde extrémité (11, 12) du bras de pédale (10) à une première distance (r₃₅) par rapport au point de pivotement (15), et l'au moins un premier ressort (33) du premier dispositif allongé (30) du premier système (35) a une première raideur de ressort (k₃₃), dans lequel la première distance (r₃₅) et la première raideur de ressort (k₃₃) de l'au moins un premier ressort (33) définissent ensemble une première courbe de sensation de pédale de la pédale de frein (10) du système de pédale de frein (1).

6. Système de pédale de frein (1) selon l'une quelconque des revendications précédentes, dans lequel la seconde position (10b) sur le bras de pédale (10), à laquelle le second dispositif allongé (50) du troisième système (55) est couplé au bras de pédale (10) avec sa première partie d'extrémité (51), est agencée entre la première et la seconde extrémités (11, 12) du bras de pédale (10) à une seconde distance (r₅₅) par rapport au point de pivotement (15), et l'au moins un second ressort (53) du second dispositif allongé (50) du troisième système (55) a une seconde raideur de ressort (k₅₃), dans lequel la seconde distance (r₅₅) et la seconde raideur de ressort (k₅₃) de l'au moins un second ressort (53) définissent ensemble une seconde courbe de sensation de pédale de la pédale de frein (10) du système de pédale de frein (1).

7. Système de pédale de frein (1) selon la revendication 5 et 6, dans lequel le première courbe de sensation de pédale du premier système (35) et la seconde courbe de sensation de pédale du troisième système (55) définissent ensemble une courbe de sensation de pédale totale de la pédale de frein (10) du système de pédale de frein (1).

8. Système de pédale de frein (1), selon l'une quelconque des revendications précédentes, dans lequel la première position (10a) sur le bras de pédale (10), à laquelle le premier dispositif allongé (30) du premier système (35) est couplé au bras de pédale (10) avec sa première partie d'extrémité (31), est agencée sur un premier côté (10aa) du bras de pédale (10), et la seconde position (10b) sur le bras de pédale (10), à laquelle le second dispositif allongé (50) du troisième système (55) est couplé au bras de pédale (10) avec sa première partie d'extrémité (51), est agencée sur un second côté (10bb) du bras de pédale (10), lequel second côté (10bb) est opposé au premier côté (10aa) du bras de pédale (10).

9. Système de pédale de frein (1), selon l'une quelconque des revendications précédentes, dans lequel le bras de pédale (10) comprend au moins un axe (14) qui s'étend à travers le bras de pédale (10) à la première position (10a) et la seconde position (10b).

10. Système de pédale de frein (1), selon l'une quelconque des revendication 1 à 8, dans lequel le bras de pédale (10) comprend au moins deux axes (14) dans lequel un axe (14) est agencé sur le premier côté (10aa) du bras de pédale (10) dans la première position (10a) sur le bras de pédale (10), et l'autre axe (14) est agencé sur le second côté (10bb) du bras de pédale (10) dans la seconde position (b) sur le bras de pédale (10).

11. Système de pédale de frein (1) selon l'une quelconque des revendications précédentes, dans lequel la première partie d'extrémité (51) du second dispositif allongé (50) du troisième système (55) comprend un premier guide (51a) qui fait saillie vers la seconde partie d'extrémité (52) du second dispositif allongé (50), et la seconde partie d'extrémité (52) comprend un second guide (52a) qui fait saillie vers la première partie d'extrémité (51) du second dispositif allongé (50), dans lequel les premier et second guides (51a, 52a) sont agencés de façon télescopique l'un relativement à l'autre, et dans lequel le second ressort (53) du second dispositif allongé (50) est agencé radialement à l'extérieur des premier et second guides (51a, 52a).

12. Système de pédale de frein (1) selon l'une quelconque des revendications précédentes, dans lequel le premier dispositif allongé compressible (30) du premier système (35) comprend en outre :
un premier guide (31a) fermement relié à la première extrémité (31) et faisant saillie vers la seconde extrémité (32) du dispositif allongé (30),
un second guide (32a) fermement relié à la seconde extrémité (32) et faisant saillie vers la première extrémité (31) du dispositif allongé (30), dans lequel les premier et second guides (31a, 32a) sont agencés de façon télescopique l'un relativement à l'autre, dans lequel le premier guide (31a) entoure une partie du second guide (32a),
dans lequel l'au moins un premier ressort (33) est une pluralité de ressorts hélicoïdaux (33a, 33b, 33c), dans lequel un premier ressort hélicoïdal (33a) est agencé autour d'au moins une partie du premier guide (31a) et un deuxième ressort hélicoïdal (33b) est agencé autour d'au moins une partie du second guide (32a),
un premier manchon (36) agencé autour d'au moins une partie du premier ressort hélicoïdal (33a), un second manchon (37) agencé autour d'au moins une partie du deuxième ressort hélicoïdal (33b),
dans lequel le premier ressort hélicoïdal (33a) est serré entre la première extrémité (31) du dispositif allongé (30) et une extrémité intérieure du premier manchon (36), et le deuxième ressort hélicoïdal (33b) est serré entre la seconde extrémité (32) du dispositif allongé (30) et une extrémité intérieure du second manchon (37),
un troisième ressort hélicoïdal (33c) agencé autour d'au moins une partie des premier et second manchons (36, 37) et lequel troisième ressort hélicoïdal (33c) est serré entre les premier et second manchons (36, 37).

13. Système de pédale de frein (1) selon la revendication 12, comprenant en outre un ou plus éléments de friction agencés entre au moins un des premier et second ressorts hélicoïdaux (33a, 33b) et les premier et second manchons entourants correspondants (36, 37).
